# EUROPEAN PATENT SPECIFICATION

(11) **EP 0 360 314 B1**
(45) Date of publication and mention of the grant of the patent: **20.10.1993**
(21) Application number: 89202164.3
(22) Date of filing: 28.08.1989
(51) Int. Cl.: B65G 61/00, B65H 49/38

(54) **Device for the transfer of yarn cones from a magazine of stacks of cones to a conveyor belt**
Vorrichtung zum Überführen von Garnkonussen aus einem Magazin mit Konusstapeln auf ein Förderband
Dispositif pour le transfert des cônes de fil d'un magasin de piles de cones à un convoyeur à bande

(30) Priority: 08.09.1988 IT 2186388
(43) Date of publication of application: 28.03.1990
(73) Proprietor: GALVANIN S.N.C., I-36016 THIENE (Vicenza) (IT)
(72) Inventor: Galvanin, Bruno, I-36035 Marano Vicentino (Vicenza) (IT)
(74) Representative: Mittler, Enrico

(56) References cited:
- DE-A- 3 638 598
- DE-B- 2 265 143

## Description

This invention relates to a device for the transfer of yarn cones from a magazine of stacks to a conveyor belt.

There exist installations for the treatment of yarn cones, in which the transfer of the cones is executed from a magazine to stacks of cones adjacent to a conveyor belt or mat.

The object of the present invention is indeed that of accomplishing a device which can execute such a transfer operation in a simple, quick and safe manner.

According to the invention such object is attained with a device characterized in that it comprises a comb-like lifting element the horizontal teeth of which may be inserted between the different stacks of cones in order to raise them progressively to a preset height and a transfer element which may be positioned over the top cone of at least one stack at a time and provided with at least one gripping assembly having vertical pins which may be moved closer together or further apart for the withdrawing engagement with the side of the cone and the release of the cone itself, respectively, on the conveyor belt.

An example of an embodiment of the present invention is illustrated for greater clarity, but with no limiting intent, in the enclosed drawings, wherein:

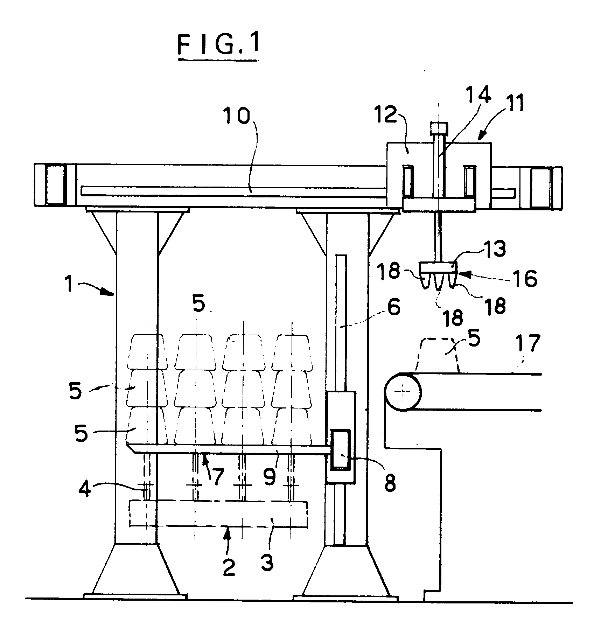

Fig. 1 shows a side elevation of a device according to the invention;
Fig. 2 shows said device in a plan view from above;
Fig. 3 shows said device seen from the left hand side with respect to Fig.s 1 and 2;
Fig. 4 shows an enlarged elevation of a detail of the cone transfer element forming part of the above device;
Fig. 5 shows the same detail in a plan view from below.

The device illustrated in the drawings comprises a supporting frame 1 which may be positioned over a magazine 2 of stacked cones formed, in the example shown, by a horizontal platform 3 and by a plurality of vertical pins placed side by side on which there are formed respective stacks of yarn cones 5 (Fig.s 1, 2 and 3).

The frame 1 has a pair of vertical guides 6 for a comb-like lifting element 7 formed by a common rib 8 and by a plurality of teeth or extensions 9 which may be inserted between one and the other of the pins 4 and under the bases of the cones 5.

On the top of the frame 1 there is also arranged a pair of horizontal guides 10 for a transfer element 11 formed by a carriage 12 which is mobile along the above guides 10, by a cross member 13 supported by said carriage 12 in a vertically displaceable mannare by means of a pneumatic cylinder 14 and guide rods 15 and by a plurality of gripping assemblies 16, one of which is shown in detail in Fig.s 4 and 5. The transfer element 11 has the task of transferring the cones 5 from the magazine 2 to a conveyor belt or mat 17 located to one side of the frame 1.

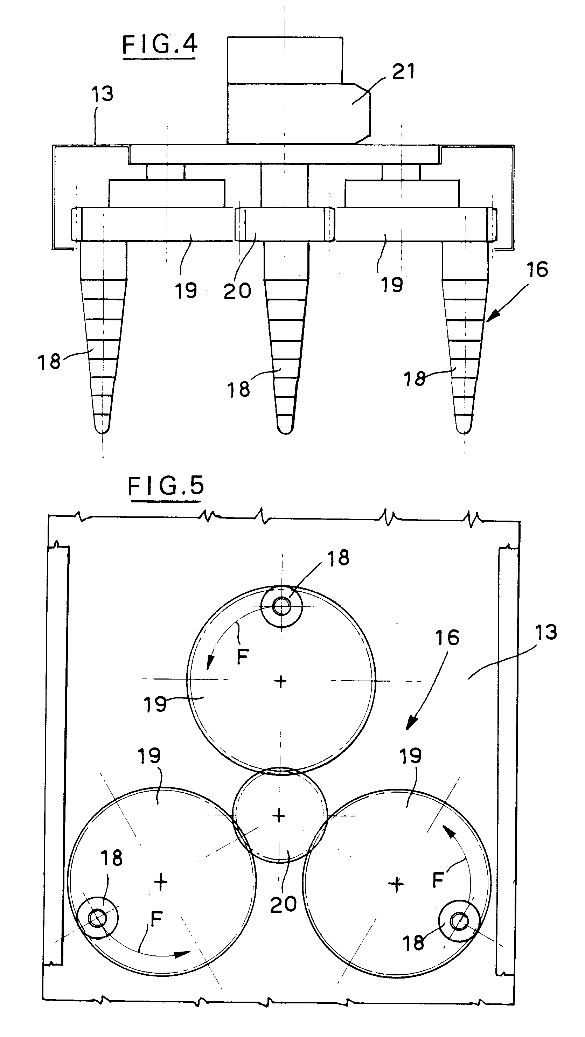

As shown in Fig.s 4 and 5, each gripping assembly 16 is formed by three tapered vertical pins 18 eccentrically fastened to respective satellite gear wheels 19 rotatably supported by the cross member 13 with axes distanced along a circumference and driven to rotate, when desired, by a solar gear wheel 20 operated by rotating pneumatic cylinder 21. As a result of such rotation (arrows F of Fig. 5) the three vertical pins 18 can come closer to one another from the further apart position of Fig. 5 to a closer together position in which they may engage the side of a cone 5 so as to execute its withdrawal from a stack of the magazine 2 and then as they draw apart again, the subsequent release on the conveyor belt 17.

More accurately, the operating cycle of the device illustrated in the drawings is as follows.

The comb-like lifting element 7 is inserted under several stacks of cones 5 and engaging with the base of the lowest cone of each pile executes the lifting of the different layers of cones up to a preset height. Substantially, the lift is of an amount equal to the height of one cone.

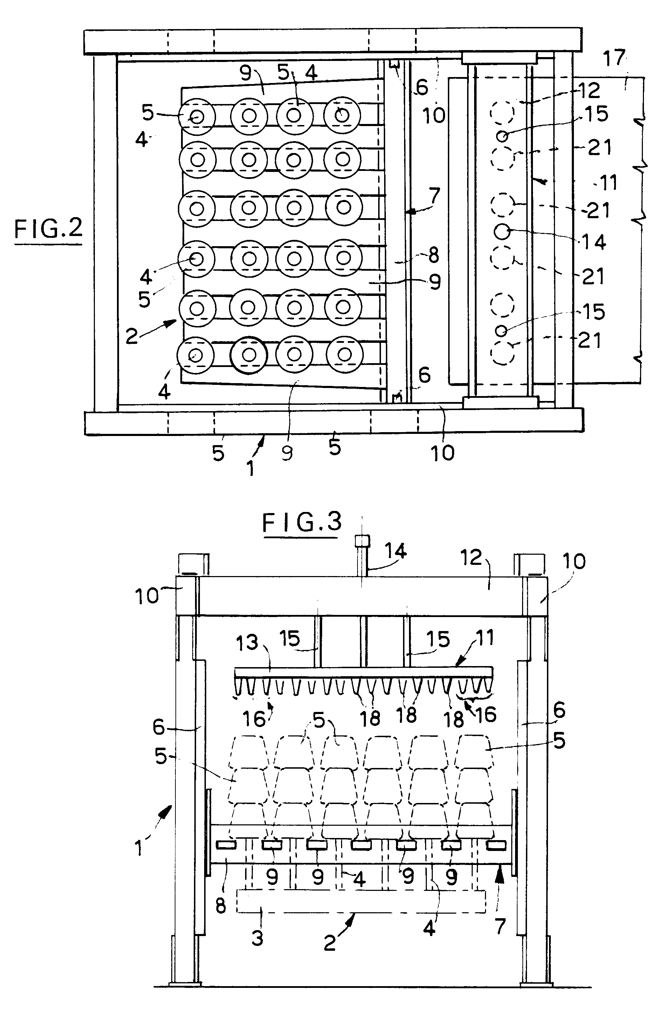

Subsequently the carriage 12, suitably motorized, is moved along the guides 10 until it is positioned above a row of cone stacks, say the right hand one looking at Fig. 2.

The cross member 13 is then driven to descend by the cylinder 14 so that the individual gripping assemblies 16 (in an open position as in Fig. 5) are taken around the uppermost cone of the stacks in the selected row, and the rotating cylinders 21 are operated so as to rotate, by means of the solar wheels 20, the satellite wheels 19 for the consequent reciprocal drawing together of the pins 18 and their engagement with the sides of the cones.

The subsequent reascent of the cross member 13, followed by the return stroke of the carriage 12 along the guides 10, allows the different gripping assemblies 16 to withdraw the engaged cones and position them on the conveyor belt 17, where a row of cones is deposited by the descent of the cross member 13 and reopening of the gripping assemblies 16.

The cycle is then repeated for the other rows of cones of the same layer, while the conveyor belt 17 is advanced step by step so as to space out between them the rows of transferred cones.

Once the transfer of the first layer of cones has been terminated, the comb-like element 7 executes another lifting step, placing the second layer at the proper level.

The cycle described is repeated until the complete transfer of the cones is obtained from the magazine 2 to the belt 17.

## Claims

1. Device for the transfer of yarn cones (5) from a magazine (2) of stacks of cones to a conveyor belt (17), characterized in that it comprises a comb-like lifting element (7) the horizontal teeth (9) of which may be inserted between the different stacks of cones in order to raise them progressively to a preset height, and a transfer element (11) which may be positioned over the top cone of at least one stack at a time and provided with at least one gripping assembly (16) having vertical pins (18) which may be moved closer together or further apart for the withdrawing engagement with the side of the cone and the release of the cone itself, respectively, on the conveyor belt (17).

2. Device according to claim 1, characterized in that said vertical pins (18) of the gripping assembly (16) are supported eccentrically by respective satellite gear wheels (19) arranged with their axes along a circumference and driven to rotate around said axes by a central solar gear wheel (20) so as to bring closer and move further away said pins (18) with respect to the centre of said circumference and to one another.

3. Device according to claim 1, characterized in that said transfer element (11) comprises a plurality of gripping assemblies (16) placed side by side for the withdrawal and the transfer of a row of cones at a time.

4. Device according to claim 3, characterized in that said gripping assemblies (16) are carried by a common cross member (13) which may be moved vertically with respect to a supporting carriage (12) displaceable in a horizontal direction between a position on top of said magazine (2) and a position on top of said conveyor belt (17).

## Patentansprüche

1. Vorrichtung zum Überführen von Garnkonussen (5) aus einem Magazin (2) mit Konusstapeln zu einem Förderband (17), dadurch gekennzeichnet, daß sie ein kammartiges Hebeelement (7), dessen horizontale Zähne (9) zwischen verschiedene Konusstapeln eingeführt werden können, um sie nacheinander auf eine vorbestimmte Höhe anzuheben, und ein Überführungselement (11), das über dem obersten Konus von mindestens einem Stapel zur Zeit positioniert werden kann und mit mindestens einer Greifanordnung (16) mit vertikalen Stiften (18) versehen ist, die näher zueinander oder weiter voneinander zum zurückziehenden Eingriff mit der Seite des Konus bzw. zum Freigeben des Konus selbst auf das Förderband bewegt werden können, aufweist.

2. Vorrichtung nach Anspruch 1, dadurch gekennzeichnet, daß die vertikalen Stifte (18) der Greifanordnung (16) exzentrisch durch entsprechende Satellitenzahnräder (19) getragen werden, die mit ihren Achsen entlang eines Umfanges angeordnet sind und durch ein Zentralsonnenzahnrad (20) so zum Drehen um die Achsen angetrieben werden, daß sie die Stifte (18) näher zueinanderbringen und weiter voneinander weg entfernen in Bezug auf die Mitte des Umfanges und in Bezug aufeinander.

3. Vorrichtung nach Anspruch 1, dadurch gekennzeichnet, daß das Überführungselement (11) eine Mehrzahl von Greifanordnungen (16) aufweist, die Seite an Seite zum Zurückziehen und Übertragen einer Reihe von Konussen zu einer Zeit angeordnet sind.

4. Vorrichtung nach Anspruch 3, dadurch gekennzeichnet, daß die Greifanordnungen (16) von einem gemeinsamen Kreuzteil (13) getragen werden, das vertikal in Bezug auf einen tragenden Wagen (12) bewegt werden kann, der in eine horizontale Richtung zwischen einer Position oberhalb des Magazins (2) und einer Position oberhalb des Förderbandes (17) versetzbar ist.

## Revendications

1. Dispositif pour le transfert de cônes (5) de fil d'un magasin (2) de piles de cônes à une courroie transporteuse (17), caractérisé en ce qu'il comprend un élément élévateur (7) en forme de peigne dont les dents horizontales (9) peuvent être insérées entre les différentes piles de cônes pour les élever progressivement à une hauteur prédéterminée et un élément de transfert (11) qui peut être positionné au-dessus du cône supérieur d'au moins une pile à la fois, et qui est équipé d'au moins un élément de préhension (16) muni de doigts verticaux (18) qui peuvent se rapprocher ou s'éloigner les uns des autres pour entrer en prise avec la surface latérale du cône pour l'enlever, ou pour le relâcher sur la courroie transporteuse (7) respectivement.

2. Dispositif selon la revendication 1, caractérisé en ce que les doigts verticaux (18) de l'ensemble de préhension (16) sont supportés excentriquement par des roues dentées satellites (19) respectives disposées de façon que leurs axes soient situés le long d'une circonférence, et qui sont entraînées pour tourner autour desdits axes par une roue dentée planétaire centrale (20) de manière à rapprocher et éloigner lesdits doigts (18) du centre de ladite circonférence et les uns de sautres.

3. Dispositif selon la revendication 1, caractérisé en ce que ledit élément de transfert (11) comprend une pluralité d'ensembles de préhension (16) placés côte à côte pour enlever et transférer une rangée de cônes à chaque fois.

4. Dispositif selon la revendication 3, caractérisé en ce que lesdites ensembles de préhension (16) sont portés par une traverse commune (13) qui peut se déplacer dans la direction verticale par rapport à un chariot support (12) qui peut se déplacer dans une direction horizontale entre une position située au-dessus dudit magasin (2) et une position située au-dessus de ladite courroie transporteuse (17).
